# EUROPÄISCHE PATENTSCHRIFT

(11) **EP 0 832 152 B1**
(45) Veröffentlichungstag und Bekanntmachung des Hinweises auf die Patenterteilung: **10.04.2002**
(21) Anmeldenummer: 96921958.3
(22) Anmeldetag: 10.06.1996
(51) Int. Cl.: C08J 3/24, C08L 33/02, H01B 7/28, D06M 15/263

(54) **DRUCKFÄHIGE QUELLPASTE UND IHRE VERWENDUNG ZUR KABELISOLIERUNG UND ZUR HERSTELLUNG VON VLIESEN**
PRINTABLE SWELLING PASTE AND ITS USE IN CABLE INSULATION AND NON-WOVEN FABRIC PRODUCTION
PATE GONFLANTE POUR IMPRESSION ET SON UTILISATION COMME ISOLATION DE CABLES ET POUR PRODUIRE DES NON TISSES

(30) Priorität: 16.06.1995 DE 19521431
(43) Veröffentlichungstag der Anmeldung: 01.04.1998
(73) Patentinhaber: STOCKHAUSEN GmbH & Co. KG, 47805 Krefeld (DE)
(72) Erfinder: HOUBEN, Jochen, D-47906 Kempen (DE); KRUG, Winfried, D-47807 Krefeld (DE)
(74) Vertreter: Kutzenberger, Helga, Dr.
(86) Internationale Anmeldenummer: EP9602503
(87) Internationale Veröffentlichungsnummer: WO9700280

(56) Entgegenhaltungen:
- EP-A- 0 282 316
- WO-A-96/23024
- US-A- 5 032 628
- US-A- 5 204 175

## Beschreibung

### Beschreibung für folgende Vertragsstaaten : AT, BE, CH, DE, DK, ES, FR, GB, GR, IE, IT, LI, LU, MC, NL, PT, SE

Die Erfindung betrifft eine druckfähige Quellpaste und ihre Verwendung zur Kabelisolierung und zur Herstellung von Vliesen.

Kabel stellen langlebige Investitionsgüter dar und müssen daher erhöhten Anforderungen an die Betriebssicherheit genügen. Schäden durch Wassereinbruch lassen sich durch Kabelisolierungen zur Abdichtung der Kabel gegen Wasser vermeiden. In der "Drahtwelt", Heft 5/1992 werden verschiedene Methoden zur längswasserdichten Isolierung von Energiekabeln, Nachrichtenkabeln und Lichtwellenleitern beschrieben. Das Schwergewicht liegt auf der Diskussion von Quellpulvern oder Quellvliesen auf Polyacrylatbasis, die in die Kabelkonstruktion eingearbeitet werden.
Superabsorbierende Polymere sind seit langem bekannt und in Form von Pulvern, zum Beispiel unter der Bezeichnung FAVOR ® oder CABLOC ® , im Handel. Allerdings ist die Verarbeitung von Pulvern technisch aufwendig und, sobald der Abrieb des Produkts bei Verarbeitung und Herstellung zu einatembarem Feinststaubanteil führt, arbeitsmedizinisch nicht unbedenklich und daher zu vermeiden.
Eine alternativ mögliche Polymerisation von Monomerlösung auf den vorgefertigten Flächen oder Fäden ist wegen der nötigen Schutzgastechnik und den zu beachtetenden Sicherheitsvorschriften Betrieben der chemischen Industrie vorbehalten und kann nicht in Betriebe anderer Branchen wie z.B. der Druck-, Kabel-, und Textilindustrie verlagert werden. Weiter ist anzustreben, daß das Produkt einen möglichst hohen Feststoffanteil aufweist und schnell quillt, um einen einmal erfolgten Wassereinbruch in das Kabel rasch abzudichten und zu begrenzen.
Eine Lösung bietet hier scheinbar die EP 188 091. In dieser wird beschrieben, daß die wäßrige Lösung eines unvernetzten Praepolymers durch Foulardieren auf ein Nonwoven aufgebracht wird. Um die richtige Viskosität für das Foulardieren zu erhalten, wird das Molgewicht des Praepolymers relativ hoch gewählt. Der dadurch verursachte Fadenzug führt zu einer Umhüllung aller Fasern mit der Praepolymerlösung. Nach der Vernetzung wird daher ein sehr hartes, unflexibles Vlies erhalten, was für eine technische Weiterverarbeitung, wie zum Beispiel das Aufrollen zur Lagerung oder zum Transport, äußerst ungünstig ist.

EP 269 778 beschreibt eine quellfähige Kabelbandage aus Vliesstoff, auf die Superabsorber-Partikel aufgebracht werden. Diese Superabsorber-Partikel quellen beim Wasserzutritt und verhindern so die Ausbreitung von Wasser entlang der Kabellängsachse. Nicht gelöst ist hierbei das Problem des Staubens.

EP 271 171 beschreibt ein Band zur Isolierung von Kabeln, welches Microkapseln enthält, die sich bei verschiedenen Temperaturen ausdehnen und so die Abdichtung des Kabels bewirken. Die Expansion der Microkapseln findet bereits bei der Produktion der Kabel statt, wie das Kabel im Betriebszustand gegen Leckagen abgedichtet werden soll, wird nicht offenbart.
In der EP 357 474 wird das Aufsprühen von niedrigviskosen wäßrigen Lösungen unvernetzter Polyacrylsäuren auf Flächengewebe und nachfolgender thermischer Vernetzung zu wasserquellbaren Gelen durch gleichzeitig aufgebrachte Vernetzer beschrieben. Problematisch an der vorgeschlagenen Verfahrensweise ist, daß das Aufsprühen zu einer unregelmäßigen Verteilung der Polymeren auf der Oberfläche des Flächengebildes führt und daß die in der Schrift kurz erwähnten anderen Aufbringverfahren wie Drucken oder Rakeln wegen des ungünstigen Viskositätsverhaltens unvernetzter Polyacrylsäuren in der Praxis nicht durchführbar sind.
EP 391 012 beschreibt eine extrudierbare Mischung für eine Kabelisolierung aufButylkautschukbasis, die ein synthetisches Quellpulver auf Polyacrylatbasis enthält. Diese Mischung ermöglicht es, auf die Spaltabdichtung zwischen dem Gummimantel und der äußeren Leitschicht zu verzichten, erfordert aber spezielle Maschinen.
Die in der EP 397 410 gelehrte Verwendung von Polyglykolhalbestern von (Meth)acrylsäuren, die zunächst mit Einpolymerisieren und anschließend über die freie Alkoholgruppe bei thermischer Nachbehandlung eine Vernetzung durch eine Esterbindung bilden können, hat den entscheidenden Nachteil, daß dazu bei den materialverträglichen Temperaturen bis 200°C Vernetzungszeiten von über einer halben Stunde benötigt werden. Für eine wirtschaftliche Anwendung ist diese Zeit zu lang.
EP 645 429 beschreibt ein wassermischbares Verdickungsmittel für Druckpasten auf der Basis einer Öl - in - Wasser - Emulsion. Als Polymer wird eine Mischung aus Carboxymethylcellulose und einem Copolymer aus Acrylsäure und Acrylamido-2-methyl-propansulfonatsalz verwendet. Quellende Eigenschaften der so erhaltenen Paste werden nicht offenbart.

WO-9623024 beschreibt eine aus zwei Komponenten bestehende quellfähige Superabsorberpaste. Die Komponente 1 ist eine wäßrige, vorvernetzte Poly(meth)acrylsäure oder ein Copolymer mit Acrylamid. Die Komponente 2 ist ein nicht weiter definierter reaktiver Vernetzer.

Der Erfindung lag deshalb die Aufgabe zugrunde, eine druckfähige Quellpaste auf Basis eines Superabsorbers bereitzustellen, die in einem Arbeitsgang auf vorgefertigte Flächengebilde aller Art, beispielsweise auf Gewebe oder Vliesstoffe, aufzubringen ist und die nach einer anschließenden thermischen Nachbehandlung in der Lage ist, in Gegenwart von Wasser oder wässrigen Lösungen schnell zu quellen und dabei das ursprüngliche Volumen zu vervielfachen. Diese Paste muß frei sein von leichtendzündlichen oder gefährlichen Stoffen und sollte bei Raumtemperatur bei gleichzeitig geringem Fadenzug das für ein Druckmedium erwünschte Viskositätsverhalten aufweisen. Die Vernetzung darf bei Temperaturen von 200°C wegen der thermischen Belastbarkeit des Basismaterials und aus wirtschaftlichen Gründen nur maximal 5 Minuten in Anspruch nehmen. Danach muß das bedruckte Flächengebilde aufrollbar sein, ohne daß es zu Zusammenklebungen kommt. Ferner soll das Verfahren mit möglichst geringen Änderungen auf den vorhandenen Maschinen mit konventioneller Technologie durchführbar sein.

Die erfindungsgemäße Aufgabe konnte überraschenderweise durch ein Gemisch zweier Komponenten gelöst werden, wobei es sich bei der Komponente 1 (95-99.9 Gewichtsprozent der Gesamtmischung) um eine wäßrige Lösung einer vorvernetzten Poly(meth)-acrylsäure handelt, welche teilweise als Salz vorliegen kann. Als Gegenionen können Kalium, Natrium oder Ammoniumionen eingesetzt werden. Bei der Komponente 1 (95-99.9 Gewichtsprozent der Gesamtmischung) kann es sich auch um eine wäßrige Lösung einer vorvernetzten Poly(meth)acrylsäure handeln, die Acrylamid als Comonomeres enthält. Dabei muß aber das carboxylgruppenhaltige Monomer stets in einem Überschuß vorhanden sein.
Der Anteil an carboxylgruppenhaltigem Monomer beträgt, bezogen auf die Gesamtmenge der eingesetzten Monomeren, mindestens 50 Mol%, bevorzugt 75 Mol%. Besonders bevorzugt sind solche Polymere, bei denen mehr als 95 Mol% der Monomeren carboxylgruppenhaltig sind.

Die Primärvernetzung, welche das beim Drucken oder Rakeln erwünschte Viskositätsverhalten ergibt, muß in Abhängigkeit von der gewünschten Auftragsmenge und der gewählten Schablone und abhängig vom Verwendungszweck unterschiedlich stark gewählt werden. In dieser wässrigen Polyacrylsäure können noch weitere, nicht einpolymerisierte Zusatzstoffe mit vorteilhafter Wirkung enthalten sein. Insbesondere kommen hier Stoffe zur Verringerung der Sprödigkeit (Härte) des getrockneten Produkts und solche zur Verringerung der Klebrigkeit in Frage.

Als Stoffe zur Verringerung der Sprödigkeit kommen beispielsweise Polyethylenglykole, Polypropylenglykole oder gemischte Polyalkoxylate in Frage, weiter Polyalkoxylate auf der Basis von mehrwertigen Alkoholen, wie beispielsweise Glycerin, Trimethylolpropan und Butandiol. Weiter kommen Tenside mit einem HLB-Wert über 10 in Frage, wie beispielsweise Alkylpolyglucoside oder ethoxylierte Zuckerester, wie beispielsweise die Polysorbate, die unter dem Namen Tween von der ICI im Handel erhältlich sind.

Als Stoffe zur Verringerung der Härte kommen kationische Tenside, wie beispielsweise Alkyltrimethylammoniumchloride oder Dialkyldimethylammoniumchloride oder Dimethyldistearylammoniumchlorid in Frage, ferner Alkylbenzyldimethylammoniumchlorid oder die entsprechenden Methosulfate oder quaternisierte Talgfettimidazoliniummethosulfate in Mengen von 0 - 5 Gew%, bezogen auf Komponente I. Diese Substanzen können vor oder nach der Polymerisation eingebracht werden und binden sich in einer Kation/Anion-Wechselwirkung an die Polycarboxylatkette an und ergeben so einen weichmachenden Effekt und zugleich eine Verbesserung der Aufnahmegeschwindigkeit für wäßrige Lösungen (siehe Vergleich Beispiel 1 mit Beispiel 2). Ein weiterer Vorteil der Substanzen ist ihre biozide Wirkung, die einen unerwünschten biologischen Abbau der Quellmittel verhindern kann. Diese Eigenschaft ist besonders bei erdverlegten Kabeln wichtig.

Als Stoffe zur Verringerung der Klebrigkeit kommen beispielsweise anorganische oder organische feinpulverige Trennmittel in einer Menge von 0 bis 2 Gew%, bezogen auf Komponente I, in Frage. Als solche können beispielsweise benutzt werden: pulveriges Holz und pulverige Holzprodukte, wie beispielsweise Holzmehl, Zellstoffasern, Baumrinde, Celluloseflocken, Baumwoll-Linters und dergleichen, mineralische Füllstoffe, wie beispielsweise Perlit, synthetische Füllmittel, wie beispielsweise Nylonflocken, Rayonflocken und dergleichen, ferner Diatomeenerde, Schlacke, Talkum, Ton, Flugasche, Kohlenstaub, Magnesiumsilikate, Düngemittel oder deren Gemische. Bevorzugt eingesetzt werden hochdisperse pyrogene Kieselsäuren, wie sie beispielsweise unter dem Handelsnamen Aerosil® von Degussa AG vermarktet werden. Diese Substanzen verringern den Fadenzug und gleichzeitig die mit der weichmachenden Wirkung der kationischen Tenside einhergehende Klebrigkeit der Produkte (Vergleich: Beispiel 1 mit Beispiel 3).

Als Primärvernetzer in einer Einsatzmenge von 0,05 - 1,0, bevorzugt 0,1 - 0,5 Gew%, bezogen auf das eigentliche Monomer oder Monomergemisch der Komponente können Verbindungen mit mindestens zwei einpolymerisierbaren Gruppen verwendet werden. Als solche Vernetzer kommen beispielsweise, aber nicht ausschließlich Di-, Tri- oder Polyvinylverbindungen wie z.B. Divinylbenzol und Divinyltoluol in Frage. Weiter kommen Di-, Tri- oder Polyester von ungesättigten Carbonsäuren, wie z.B. Acrylsäure, Methacrylsäure oder Maleinsäure mit Di-, Tri- und Polyolen, wie z.B. Ethylenglykol, Trimethylolethan, Trimethylolpropan, Glycerin oder ethoxylierten Di-, Tri- oder Polyolen in Frage. Weitere in Frage kommende Primärvernetzer sind beispielsweise Alkylenbisacrylamide wie z.B. N,N'-methylen-bis-acrylamid oder N,N'-methylenbismethacrylamid, Carbamylester, die aus der Reaktion von Polyisocyanaten mit hydroxylgruppenhaltigen Stoffen hergestellt wurden oder Di-, Tri- oder Polyallylether von Di-, Tri- oder Polyolen. Auch Allylester von ungesättigten Carbonsäuren, wie Allylacrylat und Allylmethacrylat kommen als Primärvernetzer genauso in Frage wie Di-, Tri- und Polyallylester von Polycarbonsäuren wie z.B. Diallylphthalate oder Diallyladipat. Des weiteren kommen Di- oder Triallylamin als Primärvernetzer in Frage. Die Primärvernetzer können auch als Mischungen eingesetzt werden. Bevorzugt eingesetzt werden Trimethylolpropantriacrylat, N,N'-Methylenbisacrylamid, ethoxyliertes Trimethylolpropantriacrylat und Triallylamin oder Mischungen aus den vorgenannten Verbindungen.

Als Komponente 2 der Quellpaste wird in einer Menge von 0,1 - 5 Gewichtsprozent, bezogen auf die Gesamtmenge an Komponente 1, bevorzugt 0,5 - 3,0 Gew% der reaktive Vernetzer kurz vor dem Druckvorgang zugegeben und homogen vermischt. Als reaktiver Vernetzer kommen di- und polyfunktionale Epoxide, Aziridine, Polyglycidylether und Epihalohydrine und Mischungen aus den vorstehend genannten Stoffen in Frage. Zwischen die Vernetzerfunktionen kann eine unterschiedlich lange Polyethylenglykolkette eingeschoben sein. Bevorzugt werden (Poly)ethylenglykol-bisglycidylether und besonders Ethylenglykolbisglycidylether und auch Gemische der vorstehend genannten Verbindungen. Diese werden beispielsweise von der Firma Nagase Chemicals Ltd. unter der Handelsbezeichnung Denacol vertrieben.

Als reaktive Vernetzer kommen ferner noch wasserlösliche Polyisocyanate oder wasserlösliche Polyester von Polyglykolen mit Carbonsäuren mit niedrigen Siedpunkten, wie beispielsweise Ameisensäure oder Essigsäure, in Frage.

Ungeeignet zur Verwendung als zweite Komponente sind Verbindungen, bei denen die Vernetzung durch Veresterung oder Amidierung freier Alkohol- oder Aminfunktionen aufgebaut werden muß, weil diese bei den in der Druck- oder Textilindustrie aus wirtschaftlichen Gründen üblichen Trocknungszeiten nicht vollständig genug reagieren. (siehe Vergleichsbeispiel 3).

Die Komponente 1 und 2 werden in den angegebenen Mengenverhältnissen kurz (maximal 48 Stunden, bevorzugt maximal 8 Stunden) vor dem Auftragvorgang zusammengegeben und homogen vermischt. Da es je nach Lagertemperatur und -zeit zu einer Verdickung der zunächst niederviskosen Abmischung kommt, ist eine zügige Verarbeitung dieses Zweikomponentengemisches, in der Regel am selben Tag, angebracht. Das Zweikomponentengemisch wird zweckmäßigerweise in einer Kombinationspackung geliefert. Teil 1 der Kombinationspackung besteht aus dem vorvernetzten Polymer, Teil 2 der Kombinationspackung besteht aus der abgemessenen Menge an reaktivem Vernetzer. Die Gesamtmenge an Produkt in der Kombinationspackung wird beispielsweise so bemessen, daß der Ansatz innerhalb eines Tages verarbeitbar ist.

Die so hergestellte Quellpaste kann nach bekannten Methoden auf ein vorgefertigtes Flächengebilde oder auf Fäden aufgebracht werden. Bevorzugt wird dabei das Aufdrucken oder Aufrakeln mittels Schablone auf ein Trägermedium, beispielsweise auf ein Gewebe, auf Nonwoven, auf Papier oder auf Folien zur Erreichung eines gleichmäßigen Musters.

Anschließend muß das so aufgebrachte Polymer vernetzt werden, was durch eine thermische Behandlung erreicht werden kann. Die Dauer der thermischen Behandlung hängt dabei ab von:
- der anwendbaren Temperatur und
- von der Reaktivität des gewählten eigentlichen reaktiven Vernetzers,
- sowie vom Neutralisationsgrad der polymer gebunden Carboxylfunktionen.

Sie kann zwischen 100°C und 200°C, bevorzugt zwischen 150°C - 200°C liegen. Auf jeden Fall muß die Temperatur der Vernetzung oberhalb des Siedepunktes des Lösungsmittels (beispielsweise Wasser) und unterhalb der Schrumpfüngstemperatur des Gewebes/Nonwovens liegen. Aus wirtschaftlichen Gründen liegt die zur Verfügung stehende Zeit bei unter 5 Minuten.

Vliese für den landwirtschaftlichen Bereich werden als Bewässerungsmatten (Bewässerung von Gewächshaus, Freilandkulturen und Pflanzcontainern), in Agrartextilien (z. B. zur Hang-, Böschungs- und Dachbegrünung) zur Speicherung pflanzenverfügbaren Wassers verwendet.

In der Bekleidungsindustrie dienen die erfindungsgemäß hergestellten Vliese zur Aufnahme des Körperschweißes z. B. in Textilien Schuheinlagen und Arbeitskleidung.

Für die Beerdigungsbranche dienen textile Sargeinlagen zur Aufnahme austretender Körperflüssigkeiten aus dem Leichnam.

Zur Testung der Quellpaste wurde diese jeweils mittels Schablone auf ein Polyestergewebe aufgedruckt und anschließend getrocknet. Es wurde mit Ausnahme der Vergleichsbeispiele 1 und 2 (unvernetzte Polyacrylate ) stets ein gleichmäßiges Muster von Punkten erhalten. Zur Trocknung wurden die Produkte für 3 Minuten unter einen IR-Wärmestrahlerfeld (Hersteller: Firma Elstein) gelegt.

### Anwendungstechnische Messungen:

### Messung der Quellhöhe und Quellgeschwindigkeit:

Zur Messung der Quellhöhe und der Quellgeschwindigkeit wird ein kreisrunder Ausschnitt (50,9 cm²) des beschichteten Flächengebildes in einen Kunststoffbecher mit einem Innendurchmesser von 80,5 mm und einer Höhe von 30 mm gegeben. Auf dieses Vlies wird zuerst ein dünnes Polyestervlies (Dicke 0,05 mm) und dann ein runder Stempel mit einem Durchmesser von 80 mm und einem Gewicht von 100 g gegeben. Dieser Stempel verfügt über 60 durchgehende Bohrungen von je 2 mm Durchmesser. Bei der Messung wird die Höhe der Stempeloberkante beobachtet. In den Becher werden 75 ml VE-Wasser (< 8 µS) gegeben und der Anstieg der Stempeloberkante nach 1 und 10 Minuten notiert (Doppelbestimmung).

### Messung des Fadenzugs:

Zur Messung des Fadenzugs wurde ein runder, 6 mm dicker Glasstab bei Raumtemperatur 5 cm weit in das Produkt eingetaucht und nach 30 Sekunden mit einer Geschwindigkeit von 10 cm/s senkrecht nach oben aus dem Produkt herausgezogen. Es wird die Entfernung in cm festgehalten, bei der Faden abreißt (Dreifachbestimmung).

### Beispiel 1:

2034 g Acrylsäure, 79,2 g Natronlauge (50 Gew%-ig), 4296,6 g Wasser, 16,2 g Trimethylolpropantriacrylat und 13,2 g Mercaptoethanol werden zusammen bei 30°C vorgelegt und mit 13,08 g Wasserstoffperoxid (35 Gew%-ig) und 60 g einer 1 Gew%-igen Ascorbinsäurelösung gestartet. Daraufhin steigt die Temperatur des Ansatzes innerhalb 11 Minuten auf 90°C. Bei dieser Temperatur wird noch 30 Minuten lang nachgerührt. Danach wird nach Zugabe von 62 g 35 Gew%-iger Wasserstoffperoxidlösung und 53 g 20 Gew%-iger Hydroxylaminhydrochloridlösung eine weitere Stunde nachgerührt. Nach Abkühlung des Ansatzes auf 35°C wird durch Zugabe von 2455 g 44 Gew%-iger Natronlauge neutralisiert, wobei die Temperatur nicht über 40°C steigt. Bei derselben Temperatur wurden noch 80 g Marlazin KC 30/50 (quaternierte Fettaminopolyglycolether) (Hüls AG) und 16 g Aerosil 200 (hochdisperses Siliciumdixid) (Degussa AG) eingerührt.

Die Viskosität des Produktes, gemessen in der Brookfield-Apparatur, ist abhängig von der Umdrehungszahl der Spindel:
Spindel 4; 1 UpM : 22 700 mPas
Spindel 4; 5 UpM: 18 600 mPas
Spindel 4; 10 UpM: 16 200 mPas
Fadenzug: 8 cm

Das Produkt wurde mit 3 Gew% EGDGE (Ethylenglycoldiglycidether, Lieferant: Contract Chemicals) verrührt und nach 30 Minuten auf ein Polyestergewebe mittels Lochschablone in einer Menge von 120 g/m² aufgedruckt und 3 Minuten bei 190°C getrocknet.
Das fertige Gewebe fühlte sich trocken an und klebte beim Aufrollen nicht zusammen. Quellhöhe: 1 Minute: 10 mm; 10 Minuten: 11 mm

### Beispiel 2:

Die Vorgehensweise von Beispiel 1 wurde wiederholt mit der Ausnahme, daß weder Marlazin KC 30/50 noch Aerosil 200 eingesetzt wurden. Die wäßrige Polymerisatlösung war etwas viskoser (Viskositäten nach Brookfield):
Spindel 4, 1 UpM: 22 800 mPas
Spindel 4, 5 UpM: 19 700 mPas
Spindel 4, 10 UpM: 17 900 mPas
Fadenzug: 15 cm
Das Produkt wurde wie im Beispiel 1 vernetzt. Das aufgerollte Vlies klebte leicht zusammen und war in der Quellgeschwindigkeit langsamer.
Quellhöhe 1 Minute: 8 mm; 10 Minuten: 11 mm

### Beispiel 3:

Die Polymerisation aus Beispiel 1 wurde wiederholt mit der Ausnahme, daß nach der Zugabe der Natronlauge noch 80 g Marlazin KC 30/50 (Hüls AG, Marl) nicht jedoch Aerosil 200 zugemischt wurde.
Viskositäten nach Brookfield:
Spindel 4, 1 UpM : 22 700 mPas
Spindel 4, 5 UpM: 18 600 mPas
Spindel 4,10 UpM; 16 200 mPas
Fadenzug: 12 cm

Das Produkt wurde auf ein Polyestergewebe mittels einer Lochschablone in einer Menge von 120 g/m² aufgedruckt und 3 Minuten bei 190°C getrocknet.
Quellhöhe: 1 Minute: 10 mm; 10 Minuten: 11 mm
Das getrocknete Gewebe klebte nach dem Aufrollen aneinander.

### Beispiel 4:

Die Polymerisation von Beispiel 1 wurde wiederholt, mit der Ausnahme, daß statt dem Trimethylolpropantriacrylat 2,8 g Triallylamin eingesetzt wurden und die Polymerisation bei 30°C gestartet wurde.

Viskosität nach Brookfield:
Spindel 3, 5 UpM: 6200 mPas

Das Produkt wurde mit 0,5 Gew% Denacol EX 810 (Ethylenglycoldiglycidylether) (Handelsname der Firma Nagase)
vermischt, durch eine Schablone in einer Menge von 95 g/m² auf ein Polyestergewebe aufgedruckt und 3 Minuten bei 190°C getrocknet. Erhalten wurde ein sich trocken anfühlendes Vlies, welches auch aufgerollt nicht zusammenklebte.
Quellhöhe 1 Minute: 8 mm; 10 Minuten: 9 mm

### Beispiel 5

339 g Acrylsäure, 368,25 g Natronlauge (50 Gew.%), 762 g Wasser, 0,5 Trimethylolpropan-15 EO-Triacrylat (Craynor 435 der Firma Cray Vally), 6,0 g Mercaptolthanol, werden zusammen bei 30 °C vorgelegt und mit 2,18 g Wasserstoffperoxid (35%ig) und 10 g einer 1%igen Ascorbinsäurelösung gestartet. Daraufhin steigt die Temperatur innerhalb 12 Minuten auf 82 °C an. Bei dieser Temperatur wird noch 30 Minuten lang nachgerührt. Danach wird nach Zugabe von 6,2 g 35%igen Wasserstoffperoxydlösung und 5 g 20 Gew.% Hydrotylaminhydrochloridlösung eine weitere Stunde nachgerührt. Anschließend werden 5 g Marlazin UC 30/50 (Hüls AG) und 1 g Aerosil 200 zugegeben und der Ansatz während des Abkühlens auf 40 °C weiter gut durchmischt.

Viskositäten:
Spindel 4, 1 UpM : 40 000 mPas
Spindel 4, 5 UpM : 29 000 mPas
Spindel 4, 10 UpM : 22 000 mPas
Fadenzug: 7 cm

Das Produkt wurde mit 5 Gew.% Denacol Ex 830 (PEG 400 Diglycidylether, Firma Nagase, Japan) vermischt und nach 1 Stunde auf ein Polyestergewebe mittels Lochschablone in einer Menge von 150 g/m² aufgedruckt und 3 Minuten bei 190 °C getrocknet. Das fertige Gewebe fühlt sich trocken an und klebt beim Aufrollen nicht zusammen.

Quellhöhe: 1 Minute 8 mm, 10 Minuten 11 mm

Vergleichsbeispiel 1 (Unvernetztes Polyacrylat hoher Viskosität):
gemäß EP 188 091

Die Polymerisation gemäß Beispiel 1 wurde wiederholt, mit den Ausnahmen, daß ohne Trimethylolpropantriacrylat oder einem anderen reaktiven Vernetzer gearbeitet wurde und gleichzeitig die Menge Mercaptoethanol auf 3 g zurückgenommen wurde.

Viskositäten nach Brookfield:
Spindel 4, 1 UpM: 24 000 mPas
Spindel 4, 5 UpM: 23 500 mPas
Spindel 4/10 UpM: 23 400 mPas
Fadenzug: 80 cm

Beim Auftragen dieses Produktes mittels Lochschablone konnte wegen des hohen Fadenzugs kein regelmäßiges Muster erzielt werden.

Vergleichsbeispiel 2 (Unvernetztes Polyacrylat niedriger Viskosität):
gemäß EP 307 474

Die Polymerisation gemäß Beispiel 1 wurde wiederholt, mit den Ausnahmen, daß ohne Trimethylolpropantriacrylat oder einem anderen reaktiven Vernetzer gearbeitet wurde, die Menge an Mercaptoethanol auf 26,1 g verdoppelt wurde und die Polymerisation bei 30°C gestartet wurde.

Viskositäten nach Brookfield:
Spindel 1, 5 UpM : 620 mPas
Fadenzug: 5 cm

Beim Auftragen dieses Produktes mittels derselben Lochschablone wie in Vergleichsbeispiel 4 konnten keine Druckpunkte erhalten werden. Die aufgebrachte Menge verlief zu einer dünnen Schicht. Nach dem Trocknen bei 190°C war das Vlies hart und sperrig. Ein Aufrollen zur Lagerung oder Weiterverarbeitung war fast unmöglich.

Vergleichsbeispiel 3 (Zeigt die Unwirksamkeit von Diolen als reaktive Vernetzer):
100g des Produktes aus Beispiel 1 wurden statt mit Ethylenglykolbisglycidylether mit 3 g Ethylenglykol vermischt und mittels einer Lochschablone in einer Auflagedichte von 118 g/m² aufgedruckt Das beschichtete Gewebe wurde 3 Minuten bei 190°C getrocknet. Quellhöhe: 0 mm nach 1 Minute und 0 mm nach 10 Minuten

### Beschreibung für folgende Vertragsstaaten : FI

Die Erfindung betrifft eine druckfähige Quellpaste und ihre Verwendung zur Kabelisolierung und zur Herstellung von Vliesen.

Kabel stellen langlebige Investitionsgüter dar und müssen daher erhöhten Anforderungen an die Betriebssicherheit genügen. Schäden durch Wassereinbruch lassen sich durch Kabelisolierungen zur Abdichtung der Kabel gegen Wasser vermeiden. In der "Drahtwelt", Heft 5/1992 werden verschiedene Methoden zur längswasserdichten Isolierung von Energiekabeln, Nachrichtenkabeln und Lichtwellenleitern beschrieben. Das Schwergewicht liegt auf der Diskussion von Quellpulvern oder Quellvliesen auf Polyacrylatbasis, die in die Kabelkonstruktion eingearbeitet werden.
Superabsorbierende Polymere sind seit langem bekannt und in Form von Pulvern, zum Beispiel unter der Bezeichnung FAVOR ® oder CABLOC ® , im Handel. Allerdings ist die Verarbeitung von Pulvern technisch aufwendig und, sobald der Abrieb des Produkts bei Verarbeitung und Herstellung zu einatembarem Feinststaubanteil führt, arbeitsmedizinisch nicht unbedenklich und daher zu vermeiden.
Eine alternativ mögliche Polymerisation von Monomerlösung auf den vorgefertigten Flächen oder Fäden ist wegen der nötigen Schutzgastechnik und den zu beachtetenden Sicherheitsvorschriften Betrieben der chemischen Industrie vorbehalten und kann nicht in Betriebe anderer Branchen wie z.B. der Druck-, Kabel-, und Textilindustrie verlagert werden. Weiter ist anzustreben, daß das Produkt einen möglichst hohen Feststoffanteil aufweist und schnell quillt, um einen einmal erfolgten Wassereinbruch in das Kabel rasch abzudichten und zu begrenzen.
Eine Lösung bietet hier scheinbar die EP 188 091. In dieser wird beschrieben, daß die wäßrige Lösung eines unvernetzten Praepolymers durch Foulardieren auf ein Nonwoven aufgebracht wird. Um die richtige Viskosität für das Foulardieren zu erhalten, wird das Molgewicht des Praepolymers relativ hoch gewählt. Der dadurch verursachte Fadenzug führt zu einer Umhüllung aller Fasern mit der Praepolymerlösung. Nach der Vernetzung wird daher ein sehr hartes, unflexibles Vlies erhalten, was für eine technische Weiterverarbeitung, wie zum Beispiel das Aufrollen zur Lagerung oder zum Transport, äußerst ungünstig ist.

EP 269 778 beschreibt eine quellfähige Kabelbandage aus Vliesstoff, auf die Superabsorber-Partikel aufgebracht werden. Diese Superabsorber-Partikel quellen beim Wasserzutritt und verhindern so die Ausbreitung von Wasser entlang der Kabellängsachse. Nicht gelöst ist hierbei das Problem des Staubens.

EP 271 171 beschreibt ein Band zur Isolierung von Kabeln, welches Microkapseln enthält, die sich bei verschiedenen Temperaturen ausdehnen und so die Abdichtung des Kabels bewirken. Die Expansion der Microkapseln findet bereits bei der Produktion der Kabel statt, wie das Kabel im Betriebszustand gegen Leckagen abgedichtet werden soll, wird nicht offenbart.
In der EP 357 474 wird das Aufsprühen von niedrigviskosen wäßrigen Lösungen unvernetzter Polyacrylsäuren auf Flächengewebe und nachfolgender thermischer Vernetzung zu wasserquellbaren Gelen durch gleichzeitig aufgebrachte Vernetzer beschrieben. Problematisch an der vorgeschlagenen Verfahrensweise ist, daß das Aufsprühen zu einer unregelmäßigen Verteilung der Polymeren auf der Oberfläche des Flächengebildes führt und daß die in der Schrift kurz erwähnten anderen Aufbringverfahren wie Drucken oder Rakeln wegen des ungünstigen Viskositätsverhaltens unvernetzter Polyacrylsäuren in der Praxis nicht durchführbar sind.
EP 391 012 beschreibt eine extrudierbare Mischung für eine Kabelisolierung auf Butylkautschukbasis, die ein synthetisches Quellpulver auf Polyacrylatbasis enthält. Diese Mischung ermöglicht es, auf die Spaltabdichtung zwischen dem Gummimantel und der äußeren Leitschicht zu verzichten, erfordert aber spezielle Maschinen.
Die in der EP 397 410 gelehrte Verwendung von Polyglykolhalbestern von (Meth)acrylsäuren, die zunächst mit Einpolymerisieren und anschließend über die freie Alkoholgruppe bei thermischer Nachbehandlung eine Vernetzung durch eine Esterbindung bilden können, hat den entscheidenden Nachteil, daß dazu bei den materialverträglichen Temperaturen bis 200°C Vernetzungszeiten von über einer halben Stunde benötigt werden. Für eine wirtschaftliche Anwendung ist diese Zeit zu lang.
EP 645 429 beschreibt ein wassermischbares Verdickungsmittel für Druckpasten auf der Basis einer Öl - in - Wasser - Emulsion. Als Polymer wird eine Mischung aus Carboxymethylcellulose und einem Copolymer aus Acrylsäure und Acrylamido-2-methyl-propansulfonatsalz verwendet. Quellende Eigenschaften der so erhaltenen Paste werden nicht offenbart.

Der Erfindung lag deshalb die Aufgabe zugrunde, eine druckfähige Quellpaste auf Basis eines Superabsorbers bereitzustellen, die in einem Arbeitsgang auf vorgefertigte Flächengebilde aller Art, beispielsweise auf Gewebe oder Vliesstoffe, aufzubringen ist und die nach einer anschließenden thermischen Nachbehandlung in der Lage ist, in Gegenwart von Wasser oder wässrigen Lösungen schnell zu quellen und dabei das ursprüngliche Volumen zu vervielfachen. Diese Paste muß frei sein von leichtendzündlichen oder gefährlichen Stoffen und sollte bei Raumtemperatur bei gleichzeitig geringem Fadenzug das für ein Druckmedium erwünschte Viskositätsverhalten aufweisen. Die Vernetzung darf bei Temperaturen von 200°C wegen der thermischen Belastbarkeit des Basismaterials und aus wirtschaftlichen Gründen nur maximal 5 Minuten in Anspruch nehmen. Danach muß das bedruckte Flächengebilde aufrollbar sein, ohne daß es zu Zusammenklebungen kommt. Ferner soll das Verfahren mit möglichst geringen Änderungen auf den vorhandenen Maschinen mit konventioneller Technologie durchführbar sein.

Die erfindungsgemäße Aufgabe konnte überraschenderweise durch ein Gemisch zweier Komponenten gelöst werden, wobei es sich bei der Komponente 1 (95-99.9 Gewichtsprozent der Gesamtmischung) um eine wäßrige Lösung einer vorvernetzten Poly(meth)acrylsäure handelt, welche teilweise als Salz vorliegen kann. Als Gegenionen können Kalium, Natrium oder Ammoniumionen eingesetzt werden. Bei der Komponente 1 (95-99.9 Gewichtsprozent der Gesamtmischung) kann es sich auch um eine wäßrige Lösung einer vorvernetzten Poly(meth)acrylsäure handeln, die Acrylamid als Comonomeres enthält. Dabei muß aber das carboxylgruppenhaltige Monomer stets in einem Überschuß vorhanden sein.
Der Anteil an carboxylgruppenhaltigem Monomer beträgt, bezogen auf die Gesamtmenge der eingesetzten Monomeren, mindestens 50 Mol%, bevorzugt 75 Mol%. Besonders bevorzugt sind solche Polymere, bei denen mehr als 95 Mol% der Monomeren carboxylgruppenhaltig sind.

Die Primärvernetzung, welche das beim Drucken oder Rakeln erwünschte Viskositätsverhalten ergibt, muß in Abhängigkeit von der gewünschten Auftragsmenge und der gewählten Schablone und abhängig vom Verwendungszweck unterschiedlich stark gewählt werden. In dieser wässrigen Polyacrylsäure können noch weitere, nicht einpolymerisierte Zusatzstoffe mit vorteilhafter Wirkung enthalten sein. Insbesondere kommen hier Stoffe zur Verringerung der Sprödigkeit (Härte) des getrockneten Produkts und solche zur Verringerung der Klebrigkeit in Frage.

Als Stoffe zur Verringerung der Sprödigkeit kommen beispielsweise Polyethylenglykole, Polypropylenglykole oder gemischte Polyalkoxylate in Frage, weiter Polyalkoxylate auf der Basis von mehrwertigen Alkoholen, wie beispielsweise Glycerin, Trimethylolpropan und Butandiol. Weiter kommen Tenside mit einem HLB-Wert über 10 in Frage, wie beispielsweise Alkylpolyglucoside oder ethoxylierte Zuckerester, wie beispielsweise die Polysorbate, die unter dem Namen Tween von der ICI im Handel erhältlich sind.

Als Stoffe zur Verringerung der Härte kommen kationische Tenside, wie beispielsweise Alkyltrimethylammoniumchloride oder Dialkyldimethylammoniumchloride oder Dimethyldistearylammoniumchlorid in Frage, ferner Alkylbenzyldimethylammoniumchlorid oder die entsprechenden Methosulfate oder quaternisierte Talgfettimidazoliniummethosulfate in Mengen von 0 - 5 Gew%, bezogen auf Komponente I. Diese Substanzen können vor oder nach der Polymerisation eingebracht werden und binden sich in einer Kation/Anion-Wechselwirkung an die Polycarboxylatkette an und ergeben so einen weichmachenden Effekt und zugleich eine Verbesserung der Aufnahmegeschwindigkeit für wäßrige Lösungen (siehe Vergleich Beispiel 1 mit Beispiel 2). Ein weiterer Vorteil der Substanzen ist ihre biozide Wirkung, die einen unerwünschten biologischen Abbau der Quellmittel verhindern kann. Diese Eigenschaft ist besonders bei erdverlegten Kabeln wichtig.

Als Stoffe zur Verringerung der Klebrigkeit kommen beispielsweise anorganische oder organische feinpulverige Trennmittel in einer Menge von 0 bis 2 Gew%, bezogen auf Komponente I, in Frage. Als solche können beispielsweise benutzt werden. pulveriges Holz und pulverige Holzprodukte, wie beispielsweise Holzmehl, Zellstoffasern, Baumrinde, Celluloseflocken, Baumwoll-Linters und dergleichen, mineralische Füllstoffe, wie beispielsweise Perlit, synthetische Füllmittel, wie beispielsweise Nylonflocken, Rayonflocken und dergleichen, ferner Diatomeenerde, Schlacke, Talkum, Ton, Flugasche, Kohlenstaub, Magnesiumsilikate, Düngemittel oder deren Gemische. Bevorzugt eingesetzt werden hochdisperse pyrogene Kieselsäuren, wie sie beispielsweise unter dem Handelsnamen Aerosil® von Degussa AG vermarktet werden. Diese Substanzen verringern den Fadenzug und gleichzeitig die mit der weichmachenden Wirkung der kationischen Tenside einhergehende Klebrigkeit der Produkte (Vergleich: Beispiel 1 mit Beispiel 3).

Als Primärvernetzer in einer Einsatzmenge von 0,05 - 1,0, bevorzugt 0,1 - 0,5 Gew%, bezogen auf das eigentliche Monomer oder Monomergemisch der Komponente können Verbindungen mit mindestens zwei einpolymerisierbaren Gruppen verwendet werden. Als solche Vernetzer kommen beispielsweise, aber nicht ausschließlich Di-, Tri- oder Polyvinylverbindungen wie z.B. Divinylbenzol und Divinyltoluol in Frage. Weiter kommen Di-, Tri- oder Polyester von ungesättigten Carbonsäuren, wie z.B. Acrylsäure, Methacrylsäure oder Maleinsäure mit Di-, Tri- und Polyolen, wie z.B. Ethylenglykol, Trimethylolethan, Trimethylolpropan, Glycerin oder ethoxylierten Di-, Tri- oder Polyolen in Frage. Weitere in Frage kommende Primärvernetzer sind beispielsweise Alkylenbisacrylamide wie z.B. N,N'-methylen-bis-acrylamid oder N,N'-methylenbismethacrylamid, Carbamylester, die aus der Reaktion von Polyisocyanaten mit hydroxylgruppenhaltigen Stoffen hergestellt wurden oder Di-, Tri- oder Polyallylether von Di-, Tri- oder Polyolen. Auch Allylester von ungesättigten Carbonsäuren, wie Allylacrylat und Allylmethacrylat kommen als Primärvernetzer genauso in Frage wie Di-, Tri- und Polyallylester von Polycarbonsäuren wie z.B. Diallylphthalate oder Diallyladipat. Des weiteren kommen Di- oder Triallylamin als Primärvernetzer in Frage. Die Primärvernetzer können auch als Mischungen eingesetzt werden. Bevorzugt eingesetzt werden Trimethylolpropantriacrylat, N,N'-Methylenbisacrylamid, ethoxyliertes Trimethylolpropantriacrylat und Triallylamin oder Mischungen aus den vorgenannten Verbindungen.

Als Komponente 2 der Quellpaste wird in einer Menge von 0,1 - 5 Gewichtsprozent, bezogen auf die Gesamtmenge an Komponente 1, bevorzugt 0,5 - 3,0 Gew% der eigentliche reaktive Vernetzer kurz vor dem Druckvorgang zugegeben und homogen vermischt. Als eigentlicher reaktiver Vernetzer können Verbindungen mit mindestens zwei funktionellen Gruppen eingesetzt werden, welche in der Lage sind, unter thermischer Anregung in kurzer Zeit mit Carboxylat- oder Carbonsäurefunktionen zu reagieren. Als solche Verbindungen kommen z.B. di- und polyfünktionale Epoxide, Aziridine, Polyglycidylether und Epihalohydrine und Mischungen aus den vorstehend genannten Stoffen in Frage. Zwischen die Vernetzerfunktionen kann eine unterschiedlich lange Polyethylenglykolkette eingeschoben sein. Bevorzugt werden (Poly)ethylenglykol-bisglycidylether und besonders Ethylenglykolbisglycidylether und auch Gemische der vorstehend genannten Verbindungen. Diese werden beispielsweise von der Firma Nagase Chemicals Ltd. unter der Handelsbezeichnung Denacol vertrieben.

Als reaktive Vernetzer kommen ferner noch wasserlösliche Polyisocyanate oder wasserlösliche Polyester von Polyglykolen mit Carbonsäuren mit niedrigen Siedpunkten, wie beispielsweise Ameisensäure oder Essigsäure, in Frage.

Ungeeignet zur Verwendung als zweite Komponente sind Verbindungen, bei denen die Vernetzung durch Veresterung oder Amidierung freier Alkohol- oder Aminfunktionen aufgebaut werden muß, weil diese bei den in der Druck- oder Textilindustrie aus wirtschaftlichen Gründen üblichen Trocknungszeiten nicht vollständig genug reagieren. (siehe Vergleichsbeispiel 3).

Die Komponente 1 und 2 werden in den angegebenen Mengenverhältnissen kurz (maximal 48 Stunden, bevorzugt maximal 8 Stunden) vor dem Auftragvorgang zusammengegeben und homogen vermischt. Da es je nach Lagertemperatur und -zeit zu einer Verdickung der zunächst niederviskosen Abmischung kommt, ist eine zügige Verarbeitung dieses Zweikomponentengemisches, in der Regel am selben Tag, angebracht. Das Zweikomponentengemisch wird zweckmäßigerweise in einer Kombinationspackung geliefert. Teil 1 der Kombinationspackung besteht aus dem vorvernetzten Polymer, Teil 2 der Kombinationspackung besteht aus der abgemessenen Menge an reaktivem Vernetzer. Die Gesamtmenge an Produkt in der Kombinationspackung wird beispielsweise so bemessen, daß der Ansatz innerhalb eines Tages verarbeitbar ist.

Die so hergestellte Quellpaste kann nach bekannten Methoden auf ein vorgefertigtes Flächengebilde oder auf Fäden aufgebracht werden. Bevorzugt wird dabei das Aufdrucken oder Aufrakeln mittels Schablone auf ein Trägermedium, beispielsweise auf ein Gewebe, auf Nonwoven, auf Papier oder auf Folien zur Erreichung eines gleichmäßigen Musters.

Anschließend muß das so aufgebrachte Polymer vernetzt werden, was durch eine thermische Behandlung erreicht werden kann. Die Dauer der thermischen Behandlung hängt dabei ab von:
- der anwendbaren Temperatur und
- von der Reaktivität des gewählten eigentlichen reaktiven Vernetzers,
- sowie vom Neutralisationsgrad der polymer gebunden Carboxylfunktionen.

Sie kann zwischen 100°C und 200°C, bevorzugt zwischen 150°C - 200°C liegen. Auf jeden Fall muß die Temperatur der Vernetzung oberhalb des Siedepunktes des Lösungsmittels (beispielsweise Wasser) und unterhalb der Schrumpfungstemperatur des Gewebes/Nonwovens liegen. Aus wirtschaftlichen Gründen liegt die zur Verfügung stehende Zeit bei unter 5 Minuten.

Vliese für den landwirtschaftlichen Bereich werden als Bewässerungsmatten (Bewässerung von Gewächshaus, Freilandkulturen und Pflanzcontainern), in Agrartextilien (z. B. zur Hang-, Böschungs- und Dachbegrünung) zur Speicherung pflanzenverfügbaren Wassers verwendet.

In der Bekleidungsindustrie dienen die erfindungsgemäß hergestellten Vliese zur Aufnahme des Körperschweißes z. B. in Textilien Schuheinlagen und Arbeitskleidung.

Für die Beerdigungsbranche dienen textile Sargeinlagen zur Aufnahme austretender Körperflüssigkeiten aus dem Leichnam.

Zur Testung der Quellpaste wurde diese jeweils mittels Schablone auf ein Polyestergewebe aufgedruckt und anschließend getrocknet. Es wurde mit Ausnahme der Vergleichsbeispiele 1 und 2 ( unvernetzte Polyacrylate ) stets ein gleichmäßiges Muster von Punkten erhalten. Zur Trocknung wurden die Produkte für 3 Minuten unter einen IR-Wärmestrahlerfeld (Hersteller: Firma Elstein) gelegt.

### Anwendungstechnische Messungen:

### Messung der Quellhöhe und Quellgeschwindigkeit:

Zur Messung der Quellhöhe und der Quellgeschwindigkeit wird ein kreisrunder Ausschnitt (50,9 cm²) des beschichteten Flächengebildes in einen Kunststoffbecher mit einem Innendurchmesser von 80,5 mm und einer Höhe von 30 mm gegeben. Auf dieses Vlies wird zuerst ein dünnes Polyestervlies (Dicke 0,05 mm) und dann ein runder Stempel mit einem Durchmesser von 80 mm und einem Gewicht von 100 g gegeben. Dieser Stempel verfügt über 60 durchgehende Bohrungen von je 2 mm Durchmesser. Bei der Messung wird die Höhe der Stempeloberkante beobachtet. In den Becher werden 75 ml VE-Wasser (< 8 µS) gegeben und der Anstieg der Stempeloberkante nach 1 und 10 Minuten notiert (Doppelbestimmung).

### Messung des Fadenzugs:

Zur Messung des Fadenzugs wurde ein runder, 6 mm dicker Glasstab bei Raumtemperatur 5 cm weit in das Produkt eingetaucht und nach 30 Sekunden mit einer Geschwindigkeit von 10 cm/s senkrecht nach oben aus dem Produkt herausgezogen. Es wird die Entfernung in cm festgehalten, bei der Faden abreißt (Dreifachbestimmung).

### Beispiel 1:

2034 g Acrylsäure, 79,2 g Natronlauge (50 Gew%-ig), 4296,6 g Wasser, 16,2 g Trimethylolpropantriacrylat und 13,2 g Mercaptoethanol werden zusammen bei 30°C vorgelegt und mit 13,08 g Wasserstoffperoxid (35 Gew%-ig) und 60 g einer 1 Gew%-igen Ascorbinsäurelösung gestartet. Daraufhin steigt die Temperatur des Ansatzes innerhalb 11 1 Minuten auf 90°C. Bei dieser Temperatur wird noch 30 Minuten lang nachgerührt. Danach wird nach Zugabe von 62 g 35 Gew%-iger Wasserstoffperoxidlösung und 53 g 20 Gew%-iger Hydroxylaminhydrochloridlösung eine weitere Stunde nachgerührt. Nach Abkühlung des Ansatzes auf 35°C wird durch Zugabe von 2455 g 44 Gew%-iger Natronlauge neutralisiert, wobei die Temperatur nicht über 40°C steigt. Bei derselben Temperatur wurden noch 80 g Marlazin KC 30/50 (quaternierte Fettaminopolyglycolether) (Hüls AG) und 16 g Aerosil 200 (hochdisperses Siliciumdixid) (Degussa AG) eingerührt.

Die Viskosität des Produktes, gemessen in der Brookfield-Apparatur, ist abhängig von der Umdrehungszahl der Spindel:
Spindel 4; 1 UpM : 22 700 mPas
Spindel 4; 5 UpM: 18 600 mPas
Spindel 4; 10 UpM: 16 200 mPas
Fadenzug: 8 cm

Das Produkt wurde mit 3 Gew% EGDGE (Ethylenglycoldiglycidether, Lieferant: Contract Chemicals) verrührt und nach 30 Minuten auf ein Polyestergewebe mittels Lochschablone in einer Menge von 120 g/m² aufgedruckt und 3 Minuten bei 190°C getrocknet.
Das fertige Gewebe fühlte sich trocken an und klebte beim Aufrollen nicht zusammen. Quellhöhe: 1 Minute: 10 mm; 10 Minuten: 11 mm

### Beispiel 2:

Die Vorgehensweise von Beispiel 1 wurde wiederholt mit der Ausnahme, daß weder Marlazin KC 30/50 noch Aerosil 200 eingesetzt wurden. Die wäßrige Polymerisatlösung war etwas viskoser (Viskositäten nach Brookfield):
Spindel 4, 1 UpM: 22 800 mPas
Spindel 4, 5 UpM: 19 700 mPas
Spindel 4, 10 UpM: 17 900 mPas
Fadenzug: 15 cm
Das Produkt wurde wie im Beispiel 1 vernetzt. Das aufgerollte Vlies klebte leicht zusammen und war in der Quellgeschwindigkeit langsamer.
Quellhöhe 1 Minute: 8 mm; 10 Minuten: 11 mm

### Beispiel 3:

Die Polymerisation aus Beispiel 1 wurde wiederholt mit der Ausnahme, daß nach der Zugabe der Natronlauge noch 80 g Marlazin KC 30/50 (Hüls AG, Marl) nicht jedoch Aerosil 200 zugemischt wurde.
Viskositäten nach Brookfield:
Spindel 4, 1 UpM : 22 700 mPas
Spindel 4, 5 UpM: 18 600 mPas
Spindel 4,10 UpM; 16 200 mPas
Fadenzug: 12 cm

Das Produkt wurde auf ein Polyestergewebe mittels einer Lochschablone in einer Menge von 120 g/m² aufgedruckt und 3 Minuten bei 190°C getrocknet.
Quellhöhe: 1 Minute: 10 mm; 10 Minuten: 11 mm
Das getrocknete Gewebe klebte nach dem Aufrollen aneinander.

### Beispiel 4:

Die Polymerisation von Beispiel 1 wurde wiederholt, mit der Ausnahme, daß statt dem Trimethylolpropantriacrylat 2,8 g Triallylamin eingesetzt wurden und die Polymerisation bei 30°C gestartet wurde.

Viskosität nach Brookfield:
Spindel 3, 5 UpM: 6200 mPas

Das Produkt wurde mit 0,5 Gew% Denacol EX 810 (Ethylenglycoldiglycidylether) (Handelsname der Firma Nagase)
vermischt, durch eine Schablone in einer Menge von 95 g/m² auf ein Polyestergewebe aufgedruckt und 3 Minuten bei 190°C getrocknet. Erhalten wurde ein sich trocken anfühlendes Vlies, welches auch aufgerollt nicht zusammenklebte.
Quellhöhe 1 Minute: 8 mm; 10 Minuten: 9 mm

### Beispiel 5

339 g Acrylsäure, 368,25 g Natronlauge (50 Gew.%), 762 g Wasser, 0,5 Trimethylolpropan-15 EO-Triacrylat (Craynor 435 der Firma Cray Vally), 6,0 g Mercaptolthanol, werden zusammen bei 30 °C vorgelegt und mit 2,18 g Wasserstoffperoxid (35%ig) und 10 g einer 1%igen Ascorbinsäurelösung gestartet. Daraufhin steigt die Temperatur innerhalb 12 Minuten auf 82 °C an. Bei dieser Temperatur wird noch 30 Minuten lang nachgerührt. Danach wird nach Zugabe von 6,2 g 35%igen Wasserstoffperoxydlösung und 5 g 20 Gew.% Hydrotylaminhydrochloridlösung eine weitere Stunde nachgerührt.

Anschließend werden 5 g Marlazin UC 30/50 (Hüls AG) und 1 g Aerosil 200 zugegeben und der Ansatz während des Abkühlens auf 40 °C weiter gut durchmischt.

Viskositäten:
Spindel 4, 1 UpM : 40 000 mPas
Spindel 4, 5 UpM : 29 000 mPas
Spindel 4, 10 UpM : 22 000 mPas
Fadenzug: 7 cm

Das Produkt wurde mit 5 Gew.% Denacol Ex 830 (PEG 400 Diglycidylether, Firma Nagase, Japan) vermischt und nach 1 Stunde auf ein Polyestergewebe mittels Lochschablone in einer Menge von 150 g/m² aufgedruckt und 3 Minuten bei 190 °C getrocknet. Das fertige Gewebe fühlt sich trocken an und klebt beim Aufrollen nicht zusammen.

Quellhöhe: 1 Minute 8 mm, 10 Minuten 11 mm

Vergleichsbeispiel 1 (Unvernetztes Polyacrylat hoher Viskosität):
gemäß EP 188 091

Die Polymerisation gemäß Beispiel 1 wurde wiederholt, mit den Ausnahmen, daß ohne Trimethylolpropantriacrylat oder einem anderen reaktiven Vernetzer gearbeitet wurde und gleichzeitig die Menge Mercaptoethanol auf 3 g zurückgenommen wurde.

Viskositäten nach Brookfield:
Spindel 4, 1 UpM: 24 000 mPas
Spindel 4, 5 UpM: 23 500 mPas
Spindel 4/10 UpM: 23 400 mPas
Fadenzug: 80 cm

Beim Auftragen dieses Produktes mittels Lochschablone konnte wegen des hohen Fadenzugs kein regelmäßiges Muster erzielt werden.

Vergleichsbeispiel 2 (Unvernetztes Polyacrylat niedriger Viskosität):
gemäß EP 307 474

Die Polymerisation gemäß Beispiel 1 wurde wiederholt, mit den Ausnahmen, daß ohne Trimethylolpropantriacrylat oder einem anderen reaktiven Vernetzer gearbeitet wurde, die Menge an Mercaptoethanol auf 26,1 g verdoppelt wurde und die Polymerisation bei 30°C gestartet wurde.

Viskositäten nach Brookfield:
Spindel 1, 5 UpM : 620 mPas
Fadenzug: 5 cm

Beim Auftragen dieses Produktes mittels derselben Lochschablone wie in Vergleichsbeispiel 4 konnten keine Druckpunkte erhalten werden. Die aufgebrachte Menge verlief zu einer dünnen Schicht. Nach dem Trocknen bei 190°C war das Vlies hart und sperrig. Ein Aufrollen zur Lagerung oder Weiterverarbeitung war fast unmöglich.

Vergleichsbeispiel 3 (Zeigt die Unwirksamkeit von Diolen als reaktive Vernetzer):
100g des Produktes aus Beispiel 1 wurden statt mit Ethylenglykolbisglycidylether mit 3 g Ethylenglykol vermischt und mittels einer Lochschablone in einer Auflagedichte von 118 g/m² aufgedruckt Das beschichtete Gewebe wurde 3 Minuten bei 190°C getrocknet. Quellhöhe: 0 mm nach 1 Minute und 0 mm nach 10 Minuten

## Patentansprüche (Patentansprüche für folgende(n) Vertragsstaat(en): AT, BE, CH, DE, DK, ES, FR, GB, GR, IE, IT, LU, MC, NL, PT, SE)

1. Druckfähige, aus zwei Komponenten bestehende Quellpaste auf Basis eines Superabsorbers, **dadurch gekennzeichnet, daß** die Komponente I
a) eine wäßrige, vorvernetzte Poly(meth)acrylsäure
und/oder
b) eine wäßrige, vorvernetzte Poly(meth)acrylsäure, die teilweise als Salz, vorzugsweise als Kalium-, Natrium- und/oder Ammoniumsalz vorliegt
und/oder
c) ein wäßriges, vorvernetztes Copolymer aus (Meth)acrylsäure und Acrylamid mit einem (Meth)acrylsäureanteil von ≥ 50 Mol-% enthält
und die Komponente II wenigstens ein di- oder polyfunktionelles Epoxid und/oder ein Aziridin und/oder einen Polyglycidylether und/oder ein mehrfunktionelles Isocyanat und/oder einen Polyester von Polyolen mit niedrigsiedenden Carbonsäuren und/oder ein Epihalohydrin als reaktiven Vernetzer enthält oder daraus besteht.

2. Quellpaste nach Anspruch 1, **dadurch gekennzeichnet, daß** die Komponente I mit 0,05 - 1,0, bevorzugt 0,1 - 0,5 Gewichtsprozent, bezogen auf die Monomermenge der Komponente I, eines Primärvernetzers vorvernetzt ist.

3. Quellpaste nach Anspruch 1 oder 2, **dadurch gekennzeichnet, daß** die Komponente I zusätzlich ein kationisches Tensid enthält.

4. Quellpaste nach einem der Ansprüche 1 bis 3, **dadurch gekennzeichnet, daß** die Komponente I zusätzlich ein anorganisches Trennmittel enthält.

5. Quellpaste nach einem der Ansprüche 1 bis 3, **dadurch gekennzeichnet, daß** die Komponente I zusätzlich ein organisches Trennmittel enthält.

6. Quellpaste nach Anspruch 1, **dadurch gekennzeichnet, daß** die Komponente I mit Trimethylolpropantriacrylat und/oder N, N' -Methylenbisacrylamid und/oder Triallylamin und/oder ethoxyliertem Trimethylolpropantriacrylat vorvernetzt ist.

7. Quellpaste nach Anspruch 1, **gekennzeichnet durch** einen Gehalt an 95 bis 99,9 Gew.-% an Komponente I und 0,1 - 5 Gew.-% an Komponente II, jeweils bezogen auf die Gesamtmischung an Komponente I und II.

8. Quellpaste nach Anspruch 1, **dadurch gekennzeichnet, daß** die Komponente II als reaktiven Vernetzer wenigstens ein (Poly)ethylenglykol mit zwei Epoxyfunktionen enthält oder daraus besteht.

9. Quellpaste nach Anspruch 8, **dadurch gekennzeichnet, daß** die Komponente II als reaktiven Vernetzer Ethylenglykolbisglycidylether und/oder (Poly)ethylenglykolbisglycidylether enthält oder daraus besteht.

10. Zweikomponentenpackung, bestehend aus den zwei getrennt verpackten Komponenten I und II nach einem der Ansprüche 1 bis 9, wobei die Komponente II aus 0,1 - 5 Gewichtsprozenten, bezogen auf die Menge der Komponente I, an reaktivem Vernetzer besteht.

11. Verwendung der Quellpaste nach einem der Ansprüche 1 bis 9 zur Herstellung von Kabelbandagen und zur Herstellung von Vliesen für den landwirtschaftlichen Bereich, für die Bekleidungsindustrie und für die Beerdigungsbranche.

12. Wasserdichte Kabelbandage, erhältlich durch Verwendung der Quellpaste nach einem der Ansprüche 1 bis 9.

13. Verwendung der Zweikomponentenpackung nach Anspruch 10 zur Herstellung einer druckfähigen Quellpaste.

14. Druckfähige Quellpaste auf Basis eines Superabsorbers, erhältlich durch homogene Vermischung von einer Komponente I, die
a) eine wäßrige, vorvernetzte Poly(meth)acrylsäure
und/oder
b) eine wäßrige, vorvernetzte Poly(meth)acrylsäure, die teilweise als Salz, vorzugsweise als Kalium-, Natrium- und/oder Ammoniumsalz vorliegt
und/oder
c) ein wäßriges, vorvernetztes Copolymer aus (Meth)acrylsäure und Acrylamid mit einem (Meth)acrylsäureanteil von ≥ 50 Mol-% enthält
mit einer Komponente II, die wenigstens ein di- oder polyfunktionelles Epoxid und/oder ein Aziridin und/oder einen Polyglycidylether und/oder ein mehrfunktionelles Isocyanat und/oder einen Polyester von Polyolen mit niedrigsiedenden Carbonsäuren und/oder ein Epihalohydrin als reaktiven Vernetzer enthält oder daraus besteht.

15. Verwendung der Quellpaste nach Anspruch 14 zur Herstellung von Kabelbandagen und Vliesen, **dadurch gekennzeichnet, daß** die Quellpaste auf ein vorgefertigtes Flächengebilde oder auf Fäden aufgebracht wird und anschließend die beschichtete Unterlage zwecks Vernetzung des Polymeren auf Temperaturen zwischen 100 und 200 °C erhitzt wird.

## Patentansprüche (Patentansprüche für folgende(n) Vertragsstaat(en): FI)

1. Druckfähige, aus zwei Komponenten bestehende Quellpaste auf Basis eines Superabsorbers, **dadurch gekennzeichnet, daß** die Komponente I
a) eine wäßrige, vorvernetzte Poly(meth)acrylsäure
und/oder
b) eine wäßrige, vorvernetzte Poly(meth)acrylsäure, die teilweise als Salz, vorzugsweise als Kalium-, Natrium- und/oder Ammoniumsalz vorliegt
und/oder
c) ein wäßriges, vorvernetztes Copolymer aus (Meth)acrylsäure und Acrylamid mit einem (Meth)acrylsäureanteil von ≥ 50 Mol-% enthält
und die Komponente II einen reaktiven Vernetzer enthält oder daraus besteht.

2. Quellpaste nach Anspruch 1, **dadurch gekennzeichnet, daß** die Komponente I mit 0,05 - 1,0, bevorzugt 0,1 - 0,5 Gewichtsprozent, bezogen auf die Monomermenge der Komponente I, eines Primärvernetzers vorvernetzt ist.

3. Quellpaste nach Anspruch 1 oder 2, **dadurch gekennzeichnet, daß** die Komponente I zusätzlich ein kationisches Tensid enthält.

4. Quellpaste nach einem der Ansprüche 1 bis 3, **dadurch gekennzeichnet, daß** die Komponente I zusätzlich ein anorganisches Trennmittel enthält.

5. Quellpaste nach einem der Ansprüche 1 bis 3, **dadurch gekennzeichnet, daß** die Komponente I zusätzlich ein organisches Trennmittel enthält.

6. Quellpaste nach Anspruch 1, **dadurch gekennzeichnet, daß** die Komponente I mit Trimethylolpropantriacrylat und/oder N, N' -Methylenbisacrylamid und/oder Triallylamin und/oder ethoxyliertem Trimethylolpropantriacrylat vorvernetzt ist.

7. Quellpaste nach Anspruch 1, **gekennzeichnet durch** einen Gehalt an 95 bis 99,9 Gew.-% an Komponente I und 0,1 - 5 Gew.-% an Komponente II, jeweils bezogen auf die Gesamtmischung an Komponente I und II.

8. Quellpaste nach Anspruch 1, **dadurch gekennzeichnet, daß** die Komponente II als reaktiven Vernetzer wenigstens ein di- oder polyfunktionelles Epoxid und/oder ein Aziridin und/oder einen Polyglycidylether und/oder ein mehrfunktionelles Isocyanat und/oder einen Polyester von Polyolen mit niedrigsiedenden Carbonsäuren und/oder ein Epihalohydrin enthält oder daraus besteht.

9. Quellpaste nach Anspruch 8, **dadurch gekennzeichnet, daß** die Komponente II als reaktiven Vernetzer wenigstens ein (Poly)ethylenglykol mit zwei Epoxyfunktionen enthält oder daraus besteht.

10. Quellpaste nach Anspruch 9, **dadurch gekennzeichnet, daß** die Komponente II als reaktiven Vernetzer Ethylenglykolbisglycidylether und/oder (Poly)ethylenglykolbisglycidylether enthält oder daraus besteht.

11. Zweikomponentenpackung, bestehend aus den zwei getrennt verpackten Komponenten I und II nach einem der Ansprüche 1 bis 10, wobei die Komponente II aus 0,1 - 5 Gewichtsprozenten, bezogen auf die Menge der Komponente I, an reaktivem Vernetzer besteht.

12. Verwendung der Quellpaste nach einem der Ansprüche 1 bis 10 zur Herstellung von Kabelbandagen und zur Herstellung von Vliesen für den landwirtschaftlichen Bereich, für die Bekleidungsindustrie und für die Beerdigungsbranche.

13. Wasserdichte Kabelbandage, erhältlich durch Verwendung der Quellpaste nach einem der Ansprüche 1 bis 10.

14. Verwendung der Zweikomponentenpackung nach Anspruch 11 zur Herstellung einer druckfähigen Quellpaste.

15. Druckfähige Quellpaste auf Basis eines Superabsorbers, erhältlich durch homogene Vermischung von einer Komponente I, die
a) eine wäßrige, vorvernetzte Poly(meth)acrylsäure
und/oder
b) eine wäßrige, vorvernetzte Poly(meth)acrylsäure, die teilweise als Salz, vorzugsweise als Kalium-, Natrium- und/oder Ammoniumsalz vorliegt
und/oder
c) ein wäßriges, vorvernetztes Copolymer aus (Meth)acrylsäure und Acrylamid mit einem (Meth)acrylsäureanteil von ≥ 50 Mol-% enthält
mit einer Komponente II, die einen reaktiven Vernetzer enthält oder daraus besteht.

16. Verwendung der Quellpaste nach Anspruch 15 zur Herstellung von Kabelbandagen und Vliesen, **dadurch gekennzeichnet, daß** die Quellpaste auf ein vorgefertigtes Flächengebilde oder auf Fäden aufgebracht wird und anschließend die beschichtete Unterlage zwecks Vernetzung des Polymeren auf Temperaturen zwischen 100 und 200 °C erhitzt wird.

## Claims (Claims for the following Contracting State(s): AT, BE, CH, DE, DK, ES, FR, GB, GR, IE, IT, LU, MC, NL, PT, SE)

1. A printable swelling paste comprised of two components and based on a superabsorber, **characterized in that** component I includes
a) an aqueous, pre-crosslinked poly(meth)acrylic acid and/or
b) an aqueous, pre-crosslinked poly(meth)acrylic acid partially present as a salt, preferably as a potassium, sodium and/or ammonium salt,
and/ or
c) an aqueous, pre-crosslinked copolymer of (meth)acrylic acid and acrylamide having a (meth)acrylic acid level of ≥50 mole-%,
and that component II includes as reactive crosslinker at least one di- or polyfunctional epoxide and/or an aziridine, and/or a polyglycidyl ether, and/or a multifunctional isocyanate, and/or a polyester of polyols and low-boiling carboxylic acids, and/or an epihalohydrin or consists thereof.

2. The swelling paste according to claim 1, **characterized in that** component I is pre-crosslinked with 0.05 - 1.0, preferably 0.1 - 0.5 percent by weight, relative to the amount of monomer of component I, of a primary crosslinker.

3. The swelling paste according to claim 1 or 2, **characterized in that** component I additionally includes a cationic surfactant.

4. The swelling paste according to any of claims 1 to 3, **characterized in that** component I additionally includes an inorganic antitack agent.

5. The swelling paste according to any of claims 1 to 3, **characterized in that** component I additionally includes an organic antitack agent.

6. The swelling paste according to claim 1, **characterized in that** component I has been pre-crosslinked with trimethylolpropane triacrylate and/or N,N'-methylenebisacrylamide and/or triallylamine, and/or ethoxylated trimethylolpropane triacrylate.

7. The swelling paste according to claim 1, **characterized by** a content of from 95 to 99.9 wt.-% of component I and from 0.1 to 5 wt.-% of component II, each relative to the overall mixture of components I and II.

8. The swelling paste according to claim 1, **characterized in that** component II includes as reactive crosslinker at least one (poly)ethylene glycol having two epoxy functions or consists thereof.

9. The swelling paste according to claim 8, **characterized in that** component II includes ethylene glycol bisglycidyl ether and/or (poly)ethylene glycol bisglycidyl ether as reactive crosslinker or consists thereof.

10. A two-component pack, comprised of the two separately packed components I and II according to any of claims 1 to 9, wherein said component II consists of 0.1 - 5 percent by weight, relative to the amount of component I, of reactive crosslinker.

11. Use of the swelling paste according to any of claims 1 to 9 in the production of cable jackets and in the production of non-woven fabrics for use in the agricultural field, for the clothing industry and for the burial industry.

12. A waterproof cable jacket which can be obtained by using the swelling paste according to any of claims 1 to 9.

13. Use of the two-component pack according to claim 10 in the production of a printable swelling paste.

14. A printable swelling paste based on a superabsorber, which can be obtained by homogeneous mixing of a component I which includes
a) an aqueous, pre-crosslinked poly(meth)acrylic acid
and/or
b) an aqueous, pre-crosslinked poly(meth)acrylic acid partially present as a salt, preferably as a potassium, sodium and/or ammonium salt,
and/ or
c) an aqueous, pre-crosslinked copolymer of (meth)acrylic acid and acrylamide having a (meth)acrylic acid level of ≥50 mole-%,
with a component II which includes as reactive crosslinker at least one di- or polyfunctional epoxide and/or an aziridine, and/or a polyglycidyl ether, and/or a multifunctional isocyanate, and/or a polyester of polyols and low-boiling carboxylic acids, and/or an epihalohydrin or consists thereof.

15. Use of the swelling paste according to claim 14 in the production of cable jackets and non-woven fabrics, **characterized in that** the swelling paste is coated on a prefabricated sheet material or on fibers, and the coated support subsequently is heated at temperatures between 100 and 200°C so as to effect crosslinking of the polymer.

## Claims (Claims for the following Contracting State(s): FI)

1. A printable swelling paste comprised of two components and based on a superabsorber, **characterized in that** component I includes
a) an aqueous, pre-crosslinked poly(meth)acrylic acid
and/or
b) an aqueous, pre-crosslinked poly(meth)acrylic acid partially present as a salt, preferably as a potassium, sodium and/or ammonium salt,
and/ or
c) an aqueous, pre-crosslinked copolymer of (meth)acrylic acid and acrylamide having a (meth)acrylic acid level of ≥50 mole-%,
and that component II includes a reactive crosslinker or consists thereof.

2. The swelling paste according to claim 1, **characterized in that** component I is pre-crosslinked with 0.05 - 1.0, preferably 0.1 - 0.5 percent by weight, relative to the amount of monomer of component I, of a primary crosslinker.

3. The swelling paste according to claim 1 or 2, **characterized in that** component I additionally includes a cationic surfactant.

4. The swelling paste according to any of claims 1 to 3, **characterized in that** component I additionally includes an inorganic antitack agent.

5. The swelling paste according to any of claims 1 to 3, **characterized in that** component I additionally includes an organic antitack agent.

6. The swelling paste according to claim 1, **characterized in that** component I has been pre-crosslinked with trimethylolpropane triacrylate and/or N,N'-methylenebisacrylamide and/or triallylamine, and/or ethoxylated trimethylolpropane triacrylate.

7. The swelling paste according to claim 1, **characterized by** a content of from 95 to 99.9 wt.-% of component I and from 0.1 to 5 wt.-% of component II, each relative to the overall mixture of components I and II.

8. The swelling paste according to claim 1, **characterized in that** component II includes as reactive crosslinker at least one di- or polyfunctional epoxide and/or an aziridine, and/or a polyglycidyl ether, and/or a multifunctional isocyanate, and/or a polyester of polyols and low-boiling carboxylic acids, and/or an epihalohydrin or consists thereof.

9. The swelling paste according to claim 8, **characterized in that** component II includes as reactive crosslinker at least one (poly)ethylene glycol having two epoxy functions or consists thereof.

10. The swelling paste according to claim 9, **characterized in that** component II includes ethylene glycol bisglycidyl ether and/or (poly)ethylene glycol bisglycidyl ether as reactive crosslinker or consists thereof.

11. A two-component pack, comprised of the two separately packed components I and II according to any of claims 1 to 10, wherein said component II consists of 0.1 - 5 percent by weight, relative to the amount of component I, of reactive crosslinker.

12. Use of the swelling paste according to any of claims 1 to 10 in the production of cable jackets and in the production of non-woven fabrics for use in the agricultural field, for the clothing industry and for the burial industry.

13. A waterproof cable jacket which can be obtained by using the swelling paste according to any of claims 1 to 10.

14. Use of the two-component pack according to claim 11 in the production of a printable swelling paste.

15. A printable swelling paste based on a superabsorber, which can be obtained by homogeneous mixing of a component I which includes
a) an aqueous, pre-crosslinked poly(meth)acrylic acid
and/or
b) an aqueous, pre-crosslinked poly(meth)acrylic acid partially present as a salt, preferably as a potassium, sodium and/or ammonium salt,
and/ or
c) an aqueous, pre-crosslinked copolymer of (meth)acrylic acid and acrylamide having a (meth)acrylic acid level of ≥50 mole-%,
with a component II which includes a reactive crosslinker or consists thereof.

16. Use of the swelling paste according to claim 15 in the production of cable jackets and non-woven fabrics, **characterized in that** the swelling paste is coated on a prefabricated sheet material or on fibers, and the coated support subsequently is heated at temperatures between 100 and 200°C so as to effect crosslinking of the polymer.

## Revendications (Revendications pour l'(les) Etat(s) contractant(s) suivant(s): AT, BE, CH, DE, DK, ES, FR, GB, GR, IE, IT, LU, MC, NL, PT, SE)

1. Pâte gonflante pour impression sur la base d'un superabsorbant constituée de deux composants, **caractérisée en ce que** le composant I contient :
a) un acide poly(méth)acrylique aqueux préalablement réticulé
et/ou
b) un acide poly(méth)acrylique aqueux préalablement réticulé, qui est présent en partie sous forme de sel, de préférence de sel de potassium, de sodium et/ou d'ammonium
et/ou
c) un copolymère aqueux préalablement réticulé d'acide (méth)acrylique et d'acrylamide comportant une proportion d'acide (méth)acrylique ≥ 50 % en moles,
et **en ce que** le composant II contient ou est constitué, en tant qu'agent réticulant réactif, d'au moins un époxyde di- ou polyfonctionnel et/ou d'un aziridine et/ou d'un polyglycidyléther et/ou d'un isocyanate plurifonctionnel et/ou d'un polyester de polyols avec des acides carboxyliques à bas point d'ébullition et/ou d'une épihalohydrine

2. Pâte gonflante selon la revendication 1, **caractérisée en ce que** le composant I est préalablement réticulé avec de 0,05 à 1,0 pour cent en poids, de préférence de 0,1 à 0,5 pour cent en poids d'un agent de réticulation primaire, rapporté à la quantité de monomère du composant I.

3. Pâte gonflante selon la revendication 1 ou 2, **caractérisée en ce que** le composant I contient en complément un agent tensioactif cationique.

4. Pâte gonflante selon une des revendications 1 à 3, **caractérisée en ce que** le composant I contient en complément un agent de séparation minéral.

5. Pâte gonflante selon une des revendications 1 à 3, **caractérisée en ce que** le composant I contient en complément un agent de séparation organique.

6. Pâte gonflante selon la revendication 1, **caractérisée en ce que** le composant I est préalablement réticulé avec du triméthylolpropane triacrylate et/ou avec du N,N'-méthylènediacrylamide et/ou avec du triallylamine et/ou avec du triméthylolproprane triacrylate ethoxylé.

7. Pâte gonflante selon la revendication 1, **caractérisée par** une teneur en composant I de 95 à 99,9 % en poids et une teneur en composant II de 0,1 à 5 % en poids, rapportées respectivement au mélange total des composants I et II.

8. Pâte gonflante selon la revendication 1, **caractérisée en ce que** le composant Il contient ou est constitué, en tant qu'agent réticulant réactif d'au moins un (poly)éthylèneglycol comportant deux fonctions époxy.

9. Pâte gonflante selon la revendication 8, **caractérisée en ce que** le composant II contient ou est constitué, en tant qu'agent réticulant réactif, d'éthylèneglycol bisglycidyléther et/ou de (poly)éthylèneglycol bisglycidyléther.

10. Ensemble de deux composants constitué des deux composants I et II selon une des revendications de 1 à 9 emballés séparément, dans lequel le composant II contient de 0,1 à 5 pour cent en poids d'agent réticulant réactif rapporté à la quantité de composant I.

11. Utilisation de la pâte gonflante selon une des revendications de 1 à 9 pour fabriquer des bandes isolantes de câbles et pour fabriquer des non tissés destinés au secteur agricole, à, l'industrie de l'habillement et dans le secteur de l'enterrement.

12. Bande isolante de câble étanche à l'eau obtenue en utilisant la pâte gonflante selon une des revendications de 1 à 9.

13. Utilisation de l'ensemble des deux composants selon la revendication 10 pour fabriquer une pâte gonflante pour impression.

14. Pâte gonflante pour impression sur la base d'un superabsorbant, obtenue par un mélange homogène d'un composant I, qui contient
a) un acide poly(méth)acrylique aqueux préalablement réticulé
et/ou
b) un acide poly(méth)acrylique aqueux préalablement réticulé, qui est en partie sous forme de sel, de préférence de sel de potassium, de sodium et/ou d'ammonium
et/ou
c) un copolymère aqueux préalablement réticulé d'acide (méth)acrylique et d'acrylamide comportant une proportion d'acide (méth)acrylique ≥ 50 % en moles,
avec un composant II qui contient ou est constitué, en tant qu'agent réticulant réactif, d'au moins un époxyde di- ou polyfonctionnel et/ou d'un aziridine et/ou d'un polyglycidyle éther et/ou d'un isocyanate plurifonctionnel et/ou d'un polyester de polyols avec des acides carboxyliques à bas point d'ébullition et/ou d'une épihalohydrine.

15. Utilisation de la pâte gonflante selon la revendication 14 pour fabriquer des bandes isolantes de câbles et des non tissés, **caractérisée en ce que** la pâte gonflante est appliquée sur un matériau plain préfabriqué ou sur des fils et qu'ensuite le support enduit est chauffé à des températures de 100 à 200°C pour réticuler le polymère.

## Revendications (Revendications pour l'(les) Etat(s) contractant(s) suivant(s): FI)

1. Pâte gonflante pour impression sur la base d'un superabsorbant constituée de deux composants, **caractérisée en ce que** le composant I contient :
a) un acide poly(méth)acrylique aqueux préalablement réticulé
et/ou
b) un acide poly(méth)acrylique aqueux préalablement réticulé, qui est présent en partie sous forme de sel, de préférence de sel de potassium, de sodium et/ou d'ammonium
et/ou
c) un copolymère aqueux préalablement réticulé d'acide (méth)acrylique et d'acrylamide comportant une proportion d'acide (méth)acrylique ≥ 50 % en moles,
et **en ce que** le composant II contient ou est constitué d'un agent réticulant réactif.

2. Pâte gonflante selon la revendication 1, **caractérisée en ce que** le composant I est préalablement réticulé avec de 0,05 à 1,0 pour cent en poids, de préférence de 0,1 à 0,5 pour cent en poids d'un agent de réticulation primaire, rapporté à la quantité de monomère du composant I.

3. Pâte gonflante selon la revendication 1 ou 2, **caractérisée en ce que** le composant I contient en complément un agent tensioactif cationique.

4. Pâte gonflante selon une des revendications 1 à 3, **caractérisée en ce que** le composant I contient en complément un agent de séparation minéral.

5. Pâte gonflante selon une des revendications 1 à 3, **caractérisée en ce que** le composant I contient en complément un agent de séparation organique.

6. Pâte gonflante selon la revendication 1, **caractérisée en ce que** le composant I est préalablement réticulé avec du triméthylolpropane triacrylate et/ou avec du N,N'-méthylènediacrylamide et/ou avec du triallylamine et/ou avec du triméthylolproprane triacrylate éthoxylé.

7. Pâte gonflante selon la revendication 1, **caractérisée par** une teneur en composant I de 95 à 99,9 % en poids et une teneur en composant II de 0,1 à 5 % en poids, rapportées respectivement au mélange total des composants I et II.

8. Pâte gonflante selon la revendication 1, **caractérisée en ce que** le composant II contient ou est constitué, en tant qu'agent réticulant réactif, d'au moins un époxyde di- ou polyfonctionnel et/ou d'un aziridine et/ou d'un polyglycidyle éther et/ou d'un isocyanate plurifonctionnel et/ou d'un polyester de polyols avec des acides carboxyliques à bas point d'ébullition et/ou d'une épihalohydrine.

9. Pâte gonflante selon la revendication 8, **caractérisée en ce que** le composant II contient ou est constitué, en tant qu'agent réticulant réactif d'au moins un (poly)éthylèneglycol comportant deux fonctions époxy.

10. Pâte gonflante selon la revendication 9, **caractérisée en ce que** le composant II contient ou est constitué, en tant qu'agent réticulant réactif, d'éthylèneglycol bisglycidyléther et/ou de (poly)éthylèneglycol bisglycidyléther.

11. Ensemble de deux composants constitué des deux composants I et II selon une des revendications de 1 à 10 emballés séparément, dans lequel le composant II contient de 0,1 à 5 pour cent en poids d'agent réticulant réactif rapporté à la quantité de composant I.

12. Utilisation de la pâte gonflante selon une des revendications de 1 à 10 pour fabriquer des bandes isolantes de câbles et pour fabriquer des non tissés destinés au secteur agricole, à l'industrie de l'habillement et au secteur de l'enterrement.

13. Bande isolante de câble étanche à l'eau obtenue en utilisant la pâte gonflante selon une des revendications de 1 à 10.

14. Utilisation de l'ensemble des deux composants selon la revendication 11 pour fabriquer une pâte gonflante pour impression.

15. Pâte gonflante pour impression sur la base d'un superabsorbant, obtenue par un mélange homogène d'un composant I, qui contient
a) un acide poly(méth)acrylique aqueux préalablement réticulé
et/ou
b) un acide poly(méth)acrylique aqueux préalablement réticulé, qui est en partie sous forme de sel, de préférence de sel de potassium, de sodium et/ou d'ammonium
et/ou
c) un copolymère aqueux préalablement réticulé d'acide (méth)acrylique et d'acrylamide comportant une proportion d'acide (méth)acrylique ≥ 50 % en moles,
avec un composant II qui contient ou est constitué d'un agent de réticulation réactif.

16. Utilisation de la pâte gonflante selon la revendication 15 pour fabriquer des bandes isolantes de câbles et des non tissés, **caractérisée en ce que** la pâte gonflante est appliquée sur un matériau plain préfabriqué ou sur des fils et qu'ensuite le support enduit est chauffé à des températures de 100 à 200°C pour réticuler le polymère.
